# EUROPEAN PATENT SPECIFICATION

(11) **EP 3 514 203 B1**
(45) Date of publication and mention of the grant of the patent: **10.11.2021**
(21) Application number: 17850438.7
(22) Date of filing: 15.02.2017
(51) Int. Cl.: C08L 27/06, B32B 1/08, B32B 27/30, C08K 3/04, C08K 5/10, C08L 91/00, F16L 11/08, F16L 11/12, C08K 5/00, C08K 5/103

(54) **RADIATION-RESISTANT VINYL CHLORIDE RESIN COMPOSITION**
STRAHLUNGSBESTÄNDIGE VINYLCHLORIDHARZZUSAMMENSETZUNG
COMPOSITION DE RÉSINE DE CHLORURE DE VINYLE RÉSISTANT AU RAYONNEMENT

(30) Priority: 13.09.2016 JP 2016178222; 21.09.2016 JP 2016183561
(43) Date of publication of application: 24.07.2019
(73) Proprietor: Tigers Polymer Corporation, Toyonaka-shi, Osaka 560-0082 (JP)
(72) Inventor: SHIMA, Hidenori, kobe-shi Hyogo 651-2271 (JP); SHINDO, Nobuo, kobe-shi Hyogo 651-2271 (JP); EGUSA, Fuminori, kobe-shi Hyogo 651-2271 (JP)
(74) Representative: Zimmermann, Tankred Klaus
(86) International application number: PCT/JP2017/005549
(87) International publication number: WO 2018/051528

(56) References cited:
- JP-A- H0 593 100
- JP-A- S60 184 538
- JP-A- 2001 072 805
- JP-A- 2004 251 048
- JP-A- 2007 277 341
- DATABASE CA [Online] CHEMICAL ABSTRACTS SERVICE, COLUMBUS, OHIO, US; AITKEN, I. D. ET AL: "Degradation of plasticized poly(vinyl chloride) (PVC) compositions under high-level . gamma .- radiation . II", XP002796792, retrieved from STN Database accession no. 1962:32070
- DATABASE CA [Online] CHEMICAL ABSTRACTS SERVICE, COLUMBUS, OHIO, US; LIN, WENSHU ET AL: "PVC/polyimide composite sheath material for power cable use and its preparation method", XP002796793, retrieved from STN Database accession no. 2014:1434958 & CN 104 004 291 A (TIANCHANG FUXIN ELECTRONIC CO LTD) 27 August 2014 (2014-08-27)
- DATABASE CA [Online] CHEMICAL ABSTRACTS SERVICE, COLUMBUS, OHIO, US; SHIMA, HIDENORI: "Radiation - resistant vinyl chloride resin composition for flexible hose and flexible tube", XP002796794, retrieved from STN Database accession no. 2018:523877 & JP 2018 044088 A (TIGERS POLYMER) 22 March 2018 (2018-03-22)

## Description

### TECHNICAL FIELD

The present invention relates to a radiation resistant vinyl chloride resin composition in which deterioration due to irradiation is suppressed. In particular, the present invention relates to a radiation resistant soft vinyl chloride resin composition which includes an added plasticizer. The present invention also relates to a flexible hose having a hose wall which includes such a radiation resistant vinyl chloride resin composition. The present invention also relates to a flexible tube which includes such a radiation resistant vinyl chloride resin composition.

### BACKGROUND ART

Vinyl chloride resins are highly versatile and used in various applications. Especially, a vinyl chloride resin composition including a plasticizer is soft and rich in flexibility. Therefore, this resin composition can be used for hose walls of various hoses, such as hose walls of hoses for electric vacuum cleaners and various industrial hoses.

Various resin compositions are sometimes used under radiation exposure environments. For example, vinyl chloride resins used in medical devices are subjected to irradiation during radiation sterilization operations. Also, for example, a vinyl chloride resin-containing hose used for piping of medical radiation facilities is exposed to radiation. In general, when a vinyl chloride resin is exposed to radiation, physical properties of resin, such as strength and elongation, deteriorate. As a result, the lifetime of a product including a vinyl chloride resin is shortened. Therefore, there is demanded a vinyl chloride resin composition in which deterioration due to radiation is suppressed.

JP 05-051630 A discloses a radiation resistant polyvinyl chloride resin composition including di(ethylhexyl) phthalate. Since this vinyl chloride resin composition rarely deteriorates in physical properties and seldom changes in color, it is suitable for applications such as medical devices.

Also, JP 2015-030773 A discloses a vinyl chloride resin composition for medical radiation sterilization which includes an epoxy hexahydrophthalic acid ester-based plasticizer. This vinyl chloride resin composition has excellent color change resistance to radiation sterilization.

DATABASE CA [Online], CHEMICAL ABSTRACTS SERVICE, COLUMBUS, OHIO, US; AITKEN, I. D. ET AL: "Degradation of plasticized poly(vinyl chloride) (PVC) compositions under high-level gamma- radiation II", examine the effect of various fillers on the radiation resistance of PVC. Tritolyl phosphate formulations are reported to provide the least degradation. Reoplex 100, a sebacate polyester, is reported not as good. Dioctyl sebacate formulations decrease in tensile strength. The decrease in elongation is independent of the plasticizer. No filler gives better radiation resistance than the PVC formulation itself. China clay and Ti02 show no effects on the elongation. Carbon black gives a low initial elongation, which is retained.

JP H05-93100 A describes an economical elastomer composition excellent in radiation resistance, workability and elasticity and useful for covering of an electric wire, a cable, etc., by adding a phenyl ether oil to a specified ethylene acryl elastomer.

### SUMMARY OF THE INVENTION

### PROBLEMS TO BE SOLVED BY THE INVENTION

In recent years, the need for use of flexible hoses or flexible tubes has increased in nuclear power plants or nuclear reactors, fuel reprocessing plants, disposal facilities, and related facilities. Meanwhile, the air dose of radiation or the cumulative dose sometimes increases in such facilities. Therefore, soft resins used for commonly used flexible hoses or flexible tubes rapidly deteriorate due to radiation under such environment. Thus, such soft resins have been considered to be unsuitable for the above use in the flexible hoses and tubes.

The total absorbed dose in such nuclear-related facilities needs to be assumed a level of 1 MGy (megagray) to 5 MGy. However, when subjected to irradiation with gamma (γ) rays at only 1 MGy in air, the tensile elongation of known soft vinyl chloride resins comes to be far less than 100%, as indicated by, for example, "JAERI-DATA/CODE 2003-015 Radiation resistant properties and data collection of polymeric materials, p. 49, data sheet No. PVC-2." In this manner, the soft resin properties of known soft vinyl chloride resins significantly deteriorate. Therefore, such vinyl chloride resins are difficult to use for flexible hoses or flexible tubes which are used under such high level radiation exposure environments.

The radiation resistant vinyl chloride resin compositions disclosed in JP 05-051630 A and JP 2015-030773 A are merely a technology for mainly suppressing color change of resin compositions in a case of medical sterilizing irradiation in which the radiation dose is extremely limited. Thus, even the radiation resistant vinyl chloride resin compositions of these literatures are not expected to suppress the deterioration of physical properties, such as strength and elongation, against exposure to radiation with an absorbed dose in the order of 1 MGy.

That is, soft vinyl chloride resins are rich in versatility such as flexibility and molding properties. However, the deterioration of physical properties such as strength and elongation is significant under environments of being exposed to radiation at a high level of total absorbed dose in the order of 1 to several megagrays. Therefore, it has never been considered that soft vinyl chloride resins could be used in applications such as flexible hoses and flexible tubes in nuclear related facilities. In addition, measures for suppressing the deterioration in physical properties of vinyl chloride resin compositions in such a high level of absorbed dose region have been hardly studied.

An object of the present invention is to suppress the radiation deterioration of a soft vinyl chloride resin composition due to a γ ray absorbed dose in the order of megagrays.

This object is achieved by a radiation resistant vinyl chloride resin composition according to claim 1.

Another object of the present invention is to provide a flexible hose and a flexible tube in which deterioration due to radiation is suppressed.

This object is achieved by a flexible hose according to claim 2 and by a flexible tube according to claim 3.

### SOLUTION TO THE PROBLEMS

The inventor intensively conducted studies, and found that the formulation of a prescribed amount of carbon black and/or graphite powder enhances the radiation resistant of a soft vinyl chloride resin composition. Thus, the present invention has been accomplished.

The radiation resistant vinyl chloride resin composition according to the present invention includes 100 parts by weight of a vinyl chloride resin, 20 parts by weight or more and 110 parts by weight or less of a benzoic acid-based plasticizer, 5 parts by weight or more and 50 parts by weight or less of carbon black and/or graphite powder, and 1 part by weight or more and 15 parts by weight or less of phenyl ether-based oil and grease. Furthermore, this radiation resistant vinyl chloride resin composition has a Duro A hardness before γ ray irradiation of 50 HDA or more and 95 HDA or less.

The present invention also relates to a flexible hose having a hose wall which includes the inventive radiation resistant vinyl chloride resin composition. The present invention also relates to a flexible tube which includes the inventive radiation resistant vinyl chloride resin composition.

### EFFECTS OF THE INVENTION

According to the inventive radiation resistant vinyl chloride resin composition, the deterioration in strength and elongation of resin is suppressed even when the absorbed dose of gamma rays is a high radiation dose in the order of megagrays, and the effect of suppressing deterioration is further enhanced. Also, the flexible hose and the flexible tube according to the present invention are a flexible hose and a flexible tube which have further enhanced radiation resistance.

### BRIEF DESCRIPTION OF THE DRAWINGS

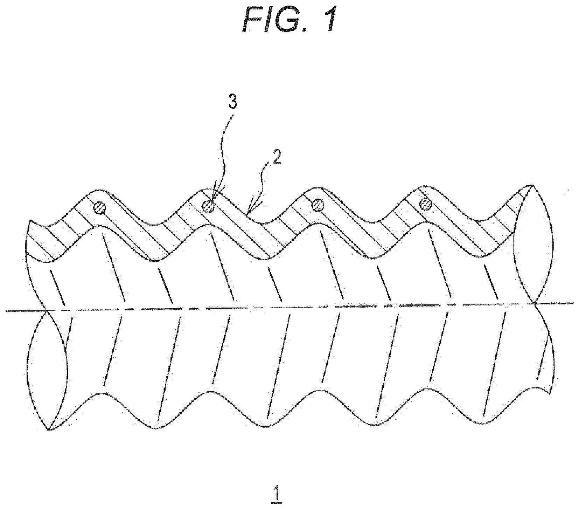

Fig. 1 is a partially cross-sectional diagram illustrating a structure of a flexible hose according to the present invention.

### DESCRIPTION OF THE EMBODIMENTS

Hereinafter, embodiments of the invention will be described with reference to the drawing as necessary. The present invention is not limited to the following individual embodiments. The individual embodiments can also be modified and implemented.

The radiation resistant vinyl chloride resin composition according to a first embodiment of the present invention includes 100 parts by weight of a vinyl chloride resin, 20 parts by weight or more and 110 parts by weight or less of a benzoic acid-based plasticizer, 5 parts by weight or more and 50 parts by weight or less of carbon black and/or graphite powder , and 1 part by weight or more and 15 parts by weight or less of phenyl ether-based oil and grease. Also, the Duro A hardness before γ ray irradiation of this resin composition is 50 HDA or more and 95 HDA or less.

Also, a flexible hose according to a second embodiment of the present invention is a flexible hose having a hose wall which includes the radiation resistant vinyl chloride resin composition according to the first embodiment. Also, a flexible tube according to a third embodiment of the present invention is a flexible tube which includes the radiation resistant vinyl chloride resin composition according to the first embodiment.

The radiation resistant vinyl chloride resin composition according to the first embodiment suppresses the deterioration in strength and elongation of resin even when the radiation dose is at a high level in which the absorbed dose of gamma rays is in the order of megagrays. The effect of suppressing the deterioration is further enhanced. Also, a flexible hose and a flexible tube according to the present invention are respectively a flexible hose and a flexible tube which contain a hose wall and a tube which have enhanced radiation resistance.

The radiation resistant vinyl chloride resin composition according to the first embodiment includes 100 parts by weight of the vinyl chloride resin, the plasticizer, and 1 part by weight or more and 15 parts by weight or less of the phenyl ether-based oil and grease.

The vinyl chloride resin is not particularly limited. The average polymerization degree of the vinyl chloride resin is preferably 1000 or more and 5000 or less, particularly preferably 2000 or more and 3000 or less. Various functional groups may be introduced to the vinyl chloride resin. The vinyl chloride resin is not limited to a polymer of only vinyl chloride monomers. The vinyl chloride resin may be a copolymer or a graft polymer of vinyl chloride monomers and another monomer component. The vinyl chloride resin in the present embodiment may also be a blend between the polymer of only vinyl chloride monomers and the copolymer or graft polymer of vinyl chloride monomers and another monomer component.

Examples of the graft polymer of vinyl chloride monomers and another monomer component may include: a graft copolymer (a resin commercially available as PVC-TG series from Sekisui Chemical Co., Ltd.) obtained by graft polymerization of vinyl chloride to EVA (an ethylene-vinyl acetate copolymer) as a backbone; and a resin (a resin commercially available as PRICTMER series from Kaneka Corporation) obtained by complete graft polymerization of an acrylic resin to a polyvinyl chloride resin. As described above, the vinyl chloride resin may be a composite resin which contains a certain amount of monomer units other than the vinyl chloride monomer units, within the range that does not impair properties such as flexibility. In the present invention, the vinyl chloride resin is a concept which encompasses both a resin substantially including only vinyl chloride monomers unit and the above-described composite resin. However, when only the latter is particularly indicated, such a vinyl chloride resin is distinguished as a vinyl chloride composite resin.

The radiation resistant vinyl chloride resin composition includes the plasticizer so that it serves as a so-called soft vinyl chloride resin. The formulation amount of the plasticizer can be adjusted such that a later-described prescribed hardness is obtained. The adjusted formulation amount of the plasticizer relative to 100 parts by weight of the vinyl chloride resin is typically 20 parts by weight or more and 200 parts by weight or less, more preferably 30 parts by weight or more and 150 parts by weight or less.

As the plasticizer, there can be used known plasticizers such as a phthalic acid ester-based plasticizer (DOP). As the plasticizer, the benzoic acid-based plasticizer (particularly, a benzoic acid ester-based plasticizer) is preferably formulated. In this case, the plasticizer is more preferably formulated such that the content of the benzoic acid-based plasticizer relative to 100 parts by weight of the vinyl chloride resin becomes 20 parts by weight or more and 110 parts by weight or less. Particularly preferably, the benzoic acid-based plasticizer is formulated such that the content becomes 30 parts by weight or more and 100 parts by weight or less. Examples of the benzoic acid ester contained in the benzoic acid-based plasticizer may include diethylene glycol dibenzoate, dipropylene glycol dibenzoate, and 1-4-cyclohexene dimethanol dibenzoate. Examples of the benzoic acid-based plasticizer may include: a plasticizer of Model No. PB-3A and a plasticizer of Model No. PB-3 available with product name Monocizer from DIC Corporation; a plasticizer of Model No. JP120 available from J-PLUS Co., Ltd.; and a plasticizer of Model No. 9-88 available with product name Benzoflex from Eastman Chemical Company.

Examples of phenyl ether-based oil and grease to be used may include oil and grease such as diphenyl ether and polyphenyl ether. Among diphenyl ethers, alkyl diphenyl ether-based oil and grease can be preferably used. A functional group other than an alkyl group may be introduced into the phenyl ether-based oil and grease. An example of alkyl diphenyl ether-based oil and grease may include an oil and grease of Model No. RA-100 and an oil and grease of Model No. RA-15 available as lubricating oil or grease with trade name HIRAD from MORESCO Corporation. An example of polyphenyl ether-based oil and grease may include an oil and grease of Model No. RP-42R available with trade name HIRAD from MORESCO Corporation. As described above, the formulation amount of these phenyl ether-based oils and greases relative to 100 parts by weight of the vinyl chloride resin is preferably 1 part by weight or more and 15 parts by weight or less.

The radiation resistant vinyl chloride resin composition according to the first embodiment has flexibility to a degree that is, for example, suitable for use in a hose wall of a flexible hose. The degree of flexibility is such that a Duro A hardness when measured in accordance with JIS K7215 before irradiation with γ rays is 50 HDA or more and 95 HDA or less. If the hardness falls within this range, the radiation resistant vinyl chloride resin composition is categorized into a so-called soft vinyl chloride resin. Therefore, this resin composition can be easily applied to a flexible hose having an existing design. It is noted that "before irradiation with γ rays" indicates a state in which the absorbed dose of γ rays to an object is 0 to 1 kGy. The absorbed dose of γ rays to an object falls in the above-described range while the object is stored under normal environment, as long as γ rays are not directly applied by a radiation generator. The Duro A hardness after irradiation with γ rays of the above-described radiation resistant vinyl chloride resin composition is not particularly limited. For example, even when the absorbed dose is 3 MGy, the Duro A hardness is preferably maintained to 50 HDA or more and 95 HDA or less.

The radiation resistant vinyl chloride resin composition according to the first embodiment may preferably include fine powder of carbon, that is, carbon black and/or graphite powder. Preferably, the formulation amount of the carbon black and/or graphite powder relative to 100 parts by weight of the vinyl chloride resin is 5 parts by weight or more and 50 parts by weight or less. The type of carbon black is not particularly limited. Examples of carbon black to be used may include carbon such as furnace black, channel black, acetylene black, and thermal black. Among these, carbon black having favorable dispersibility into the vinyl chloride resin can be selected and used. The type of graphite powder is also not particularly limited. Examples of graphite powder to be used may include artificial graphite powder and powdered expanded graphite. Both carbon black and graphite powder may be included therein. When both carbon black and graphite powder are included, the formulation amount thereof relative to 100 parts by weight of the vinyl chloride resin may be 5 parts by weight or more and 50 parts by weight or less. The formulation amount of each is not particularly limited.

The radiation resistant vinyl chloride resin composition according to the first embodiment may include other components for various purposes such as enhancement of the dispersibility of formulated components, enhancement of handleability, and enhancement of specific properties. For example, a known stabilizer or thermal stabilizer may be formulated in order to enhance the stability, particularly the thermal stability, of materials. Similarly, an age resistor, a processing aid, a lubricant, and a pigment may be formulated.

The radiation resistant vinyl chloride resin composition according to the first embodiment can be obtained by a known manufacturing method of a vinyl chloride resin composition. That is, an intended vinyl chloride resin composition can be obtained by sequentially adding formulated components to a vinyl chloride resin which serves as a base, while uniformly dispersing the formulated components by a mixing roll. A masterbatch may be used as necessary, corresponding to the difficulty of kneading components.

The shape of the vinyl chloride resin composition is not particularly limited. The shape may be indefinite, or may be a molded body. It is preferable that components in the vinyl chloride resin composition be uniformly miscible with each other. However, a gradient or uneven distribution of concentration may exist in the composition. Especially, when the vinyl chloride resin composition is a molded body, a specific component may be localized in the vicinity of the surface of the molded body.

The radiation resistant vinyl chloride resin composition according to the first embodiment can also be used to manufacture the flexible hose 1 illustrated in Fig. 1.

Fig. 1 illustrates the flexible hose 1 having the hose wall 2 which includes the radiation resistant vinyl chloride resin composition. Fig. 1 illustrates the upper half by a cross-sectional diagram and the lower half by an appearance. In the present embodiment, the hose wall 2 has a spiral bellow shape. The flexible hose 1 is configured such that a spiral reinforcement body 3 constituted by hard steel wire is buried under the hose wall 2. Since this hose has appropriate flexibility, it can be used as various piping. It is noted that the material of the reinforcement body 3 may be another material. The form for unifying the reinforcement body 3 to the hose wall 2 may also be, other than the above-described buried form, a form in which the reinforcement body 3 is adhesively integrated to the inner circumference or outer circumference of the hose wall. Such a flexible hose 1 can be manufactured by a known hose manufacturing method.

Also, the radiation resistant vinyl chloride resin composition according to the first embodiment can be used to form a flexible tube. The flexible tube typically has a cylindrical tube wall. The tube wall is formed with the radiation resistant vinyl chloride resin composition. Such a flexible tube is typically manufactured by extrusion molding. Since such a flexible tube has appropriate flexibility, it can be used for various piping.

Also, the radiation resistant vinyl chloride resin composition according to the first embodiment can be applied to other uses in which a soft vinyl chloride resin is utilized, such as coating of electric wires. Also, shielding materials such as barium sulfate, tungsten, and lead can be formulated into the radiation resistant vinyl chloride resin composition, thereby to prepare a resin composition having radiation shielding performance. The prepared composition can also be molded into a soft sheet or a soft cover to be used.

The operation and effect of the radiation resistant vinyl chloride resin composition according to the first embodiment will be described. The radiation resistant vinyl chloride resin composition according to the first embodiment includes 100 parts by weight of a vinyl chloride resin, a plasticizer, and 1 parts by weight or more and 15 parts by weight or less of phenyl ether-based oil and grease. Therefore, even when the radiation resistant vinyl chloride resin composition is exposed to high level radiation (y rays) with an absorbed dose in the order of megagrays, the deterioration in strength and elongation of resin is suppressed.

Also, a resin having higher radiation resistant properties, among the radiation resistant vinyl chloride resin compositions according to the first embodiment, can maintain an elongation of 100%, for example, even when the absorbed dose of γ rays reaches 3 MGy. Such properties are particularly suitable for use in a flexible hose which is utilized under high level radiation exposure environments.

Regarding the change in a molecular structure due to radiation deterioration of synthetic resins, particularly a soft vinyl chloride resin, the following mechanisms are conceivable. Firstly, a mechanism is conceivable in which irradiation with γ rays causes the plasticizer component to rupture, degrade, or bleed out, leading to loss of flexibility of a soft vinyl chloride resin, with the result that the strength and elongation of resin deteriorate. Secondly, a mechanism is conceivable in which irradiation with γ rays causes polymers of the vinyl chloride resin to have a crosslinking point with each other, leading to hardening and embrittlement of resin, with the result that the strength and elongation of resin deteriorate. Thirdly, a mechanism is conceivable in which resin becomes difficult to retain the plasticizer as the crosslinking of the vinyl chloride resin proceeds, causing the plasticizer to bleed out from resin thereby to promote the hardening of resin, with the result that the strength and elongation of resin deteriorate.

Also, when the radiation resistant vinyl chloride resin composition according to the first embodiment further includes a predetermined amount of phenyl ether-based oil and grease, the phenyl ether-based oil and grease also serves as a plasticizer in the vinyl chloride resin composition. Accordingly, the flexibility of resin is enhanced. Since the phenyl ether-based oil and grease has a benzene ring, it is relatively unlikely to degrade in response to the irradiation with γ rays. Therefore, it is estimated that such an effect is achieved as a result of the phenyl ether-based oil and grease contributing to the suppression of the degradation of the plasticizer component due to γ ray irradiation, which is the above-described first deterioration mechanism.

Also, it is difficult to formulate a large amount (for example, 20 parts or more) of the phenyl ether-based oil and grease into the vinyl chloride resin composition. Although the phenyl ether-based oil and grease is sometimes used in combination with another plasticizer, it is more likely to leave the vinyl chloride resin than a substance (for example, DOP) commonly used as a plasticizer of a vinyl chloride resin. Therefore, in the above-described vinyl chloride resin composition, the phenyl ether-based oil and grease is more likely to bleed out than the other plasticizers. As a result, the amount of the phenyl ether-based oil and grease existing on the surface of a molded product of the resin composition is likely to increase. Accordingly, the phenyl ether-based oil and grease, which is unlikely to degrade in response to γ ray irradiation, receives γ rays on the surface of the molded product like, so to speak, a protective coating. It is estimated that this allows for slowing down of the progress of crosslinking of the vinyl chloride resin inside a molded body and the degradation of other plasticizers. That is, the phenyl ether-based oil and grease also contributes to the suppression of the above-described second and third deterioration mechanisms.

From the viewpoint of enhancing the degradation resistance of the phenyl ether-based oil and grease itself to γ rays, the phenyl ether-based oil and grease is preferably selected such that the ratio of a benzene ring part in the whole molecule becomes higher in polymers constituting the phenyl ether-based oil and grease. Also, from the viewpoint of relatively facilitating the formulation into the vinyl chloride resin and increasing the resistance to γ rays, the phenyl ether-based oil and grease is more preferably alkyl diphenyl ether-based oil and grease or polyphenyl ether-based oil and grease.

In addition to the phenyl ether-based oil and grease, the benzoic acid-based plasticizer may be further included in an amount of 20 parts by weight or more and 110 parts by weight or less relative to 100 parts by weight of the vinyl chloride resin. Accordingly, the benzoic acid-based plasticizer having a benzene ring, which has high degradation resistance to γ ray irradiation, contributes to the suppression of the degradation of a plasticizer component due to γ ray irradiation which is attributable to the first deterioration mechanism. Thus, the deterioration in strength and elongation of resin is further suppressed.

Also, the carbon black and/or graphite powder may be included in an amount of 10 parts by weight or more and 50 parts by weight or less relative to 100 parts by weight of the vinyl chloride resin. Accordingly, the carbon black or graphite powder functions such that the crosslinking between polymers of the vinyl chloride resin is inhibited, thereby contributing to the suppression of the second and third deterioration mechanisms. Thus, the deterioration in strength and elongation of resin is further suppressed. From the viewpoint of more effectively inhibiting the crosslinking between polymers of the vinyl chloride resin, graphite powder is more preferably included.

The radiation resistant vinyl chloride resin composition according to the first embodiment is used to constitute a flexible hose in such a manner that the radiation resistant vinyl chloride resin composition is included in a hose wall. This allows for the achievement of a flexible hose which can maintain a certain degree of strength and flexibility even under an environment in which the flexible hose is subjected to high level γ ray irradiation with an absorbed dose in the order of megagrays. Such a flexible hose is useful in nuclear facilities, and operation sites of reactor decommissioning. It is noted that the form in which the radiation resistant vinyl chloride resin composition is used in the hose wall may be a form in which the entirety of the hose wall is constituted by the radiation resistant vinyl chloride resin composition. Alternatively, the form may be a form in which the radiation resistant vinyl chloride resin composition is used as a material constituting some of the layers of the hose wall, together with metal foil, other film-like materials, or coating materials.

Similarly, the flexible tube including the radiation resistant vinyl chloride resin composition according to the first embodiment can maintain a certain degree of strength and flexibility even under an environment in which the flexible hose is subjected to high level γ ray irradiation with an absorbed dose in the order of megagrays. It is noted that a reinforcement body may be integrated with such a flexible tube. Furthermore, a layer including another material may be disposed in the tube.

### EXAMPLES

The radiation resistant properties to γ ray irradiation of the radiation resistant vinyl chloride resin compositions according to the above-described embodiments will be illustrated by way of the following examples. It is noted that the present invention is not limited to these examples.

The formulation example and the change in physical properties before and after γ ray irradiation of Reference Examples according to the first embodiment are indicated in Table 1 to Table 4.

The vinyl chloride resin composition according to the formulation of Examples and Reference Examples was prepared by kneading the formulated components by a roll such that they were uniformly dispersed. It is noted that all units of the formulation in Tables are parts by weight. Hereinafter, the formulated materials in Tables will be described.

### (Vinyl chloride resin)

The types of the vinyl chloride resin (PVC) are as follows.

"PVC (4500)" indicates a polyvinyl chloride resin having an average polymerization degree of 4500. The value in () indicates an average polymerization degree.

"PRICTMER GX" is a graft polymer of vinyl chloride monomers and another monomer component, and is a resin obtained by complete graft polymerization of acrylic resin to polyvinyl chloride resin. This resin is available as PRICTMER series from Kaneka Corporation.

"TG-40" is a graft polymer of vinyl chloride monomers and another monomer component. "TG-40" is a graft copolymer obtained by graft polymerization of vinyl chloride to EVA (an ethylene-vinyl acetate copolymer) as a backbone. This resin is available as PVC-TG series from Sekisui Chemical Co., Ltd.

### (Plasticizer)

The types of the plasticizer are as follows.

"DOP" is dioctyl phthalate.

"PB-3A" and "PB-3" are benzoic acid-based plasticizers, and available with trade name Monocizer from DIC Corporation.

### (Phenyl ether-based oil and grease)

The types of the phenyl ether-based oil and grease are as follows.

"HIRAD RA-15" and "HIRAD RA-100" are alkyl diphenyl ether-based oil and grease, and available as lubricating oil or grease from MORESCO Corporation.

"HIRAD RP-42R" is polyphenyl ether-based oil and grease, and available from MORESCO Corporation.

### (Carbon powder)

The types of the carbon black and/or graphite powder are as follows.

"CB (acetylene)" is acetylene black. "CB (acetylene)" is a carbon black having a relatively large diameter, available as DENKA BLACK HS-100 from Denka Company Limited.

"CB #960" is pyrolytic carbon black. "CB #960" is a carbon black having a relatively small diameter, available with Model No. #960 from Mitsubishi Chemical Corporation.

"Graphite WF-7" is an expanded graphite available from Fuji Kokuen K.K.

### (Other formulating agents)

As the thermal stabilizer, ESO (epoxidized soy bean oil) is formulated.

As the stabilizer, a barium/zinc-based stabilizer is formulated.

As the processing aid, a polyester-based processing aid is formulated. As the lubricant, stearic acid is formulated.

A No. 5 dumbbell for tensile tests was prepared with the vinyl chloride resin composition according to each of Reference Examples. The resin was subjected to a hardness measurement and a tensile test before and after irradiation with γ rays, thereby measuring mechanical properties. It is noted that Duro A hardness was measured as resin hardness using a durometer which conforms to JIS K7215.

### (Tensile test)

In accordance with JIS K7161, elongate-deformation was applied to a prescribed dumbbell at a tensile speed of 200 mm/min, thereby to measure tensile maximum stress, tensile 100% modulus (tensile 100 M), and tensile elongation.

### (γ Ray irradiation)

A sample (dumbbell) for measuring physical properties after exposure to γ rays was irradiated with γ rays. In the irradiation with γ rays, cobalt 60 was used as an irradiation source. The irradiation with γ rays was performed at room temperature in the atmosphere such that the dose rate became 8.35 kGy/h.

The samples described in Table 1 to Table 3 were irradiated with γ rays for about 360 hours such that the absorbed dose became 3 MGy. The samples described in Table 4 were irradiated with γ rays for about 240 hours such that the absorbed dose became 2 MGy.

Hereinafter, test results will be summarized.

All of Reference Examples have preferable hardness, strength and elongation as a soft vinyl chloride resin composition, before γ ray irradiation.

As understood from Table 4, the retention of tensile elongation after 2 MGy irradiation is significantly improved in Reference Examples (Reference Example 41 to Reference Example 44) in which the phenyl ether-based oil and grease is formulated, compared to in Reference Example 40 in which the phenyl ether-based oil and grease is not formulated. Also, as understood from comparison among these reference examples, the use of a combination of the benzoic acid-based plasticizer and the phenyl ether-based oil and grease (Reference Example 43 and Reference Example 44) is particularly effective in improving the retention of tensile elongation. Also, as understood from comparison between Reference Example 43 and Reference Example 44, the phenyl ether-based oil and grease may be either alkyl diphenyl ether-based oil and grease or polyphenyl ether-based oil and grease.

According to Table 1 to Table 3, the following is understood.

When the phenyl ether-based oil and grease is formulated as in Reference Example 21 to Reference Example 23, tensile elongation can be maintained near 100% even after 3 MGy irradiation. This is considerably high level radiation resistant properties for a vinyl chloride resin composition.

Also, when the benzoic acid-based plasticizer and the phenyl ether-based oil and grease are used in combination as in Reference Example 25 to Reference Example 33, the retention of tensile elongation after 3 MGy irradiation can be further enhanced.

Also, when the carbon black and/or graphite powder and the phenyl ether-based oil and grease are used in combination as in Reference Example 24, Example 27, and Example 34 to Example 38, the retention of tensile elongation after 3 MGy irradiation can be further enhanced.

Especially, when the carbon black and/or graphite powder, the benzoic acid-based plasticizer, and the phenyl ether-based oil and grease are used in combination, further high tensile elongation is maintained, as in Example 34 to Example 38 in which the tensile elongation after 3 MGy irradiation is 150% or more to more than 200%.

Also, as understood from comparison among Example 34, Example 37, and Example 38, the formulation of graphite powder is particularly effective in maintaining the tensile elongation after 3 MGy irradiation.

Also, as understood from comparison among Reference Example 26, Reference Example 28, and Reference Example 29, the average polymerization degree of the vinyl chloride resin is somewhat preferably about 2500. Also, as understood from Reference Example 26, Reference Example 28, Reference Example 29, Reference Example 30, Reference Example 31, the effect of suppressing the deterioration in physical properties after γ ray irradiation due to the formulation of the phenyl ether-based oil and grease is largely exerted regardless of the type or blend of the vinyl chloride resin which serves as a base.

Also, in Reference Examples illustrated in Table 3, each sample was immersed in THF (tetrahydrofuran) for 3 hours after γ ray irradiation with an absorbed dose of 3 MGy. It was tested whether a sample is dissolved and to what extent a sample is swollen. The evaluation was performed by visual observation, and denoted as three levels depending on the dissolution extent of a sample. That is, when no dissolution was observed, it was evaluated as Poor. When a loss of a sample due to dissolution or coloring of THF was observed, it was evaluated as Fair. When a sample was completely dissolved, it was evaluated as Good. In Reference Example 32 and Reference Example 33 in which carbon black is not included, a sample after γ ray irradiation was substantially insoluble. In brief, this indicates that in the samples, polymer chains of the vinyl chloride resin are crosslinked with each other by irradiation with γ rays, causing a sample to become insoluble in a solvent. On the other hand, Example 34 to Example 39 in which carbon black or graphite powder is formulated were resulted in "slightly dissolved" in which a sample after γ ray irradiation is slightly dissolved into THF. That is, the formulated carbon black or graphite powder suppressed the crosslinking of polymer chains of the vinyl chloride resin.

**[Table 1]**

| Formulation | Reference Example 21 | Reference Example 22 | Reference Example 23 | Reference Example 24 |
|---|---|---|---|---|
| PVC (4500) | | | | |
| PVC (2500) | 100 | 100 | 100 | 100 |
| PVC (1300) | | | | |
| PRICTMER GX | | | | |
| TG-40 | | | | |
| DOP | 80 | 80 | 80 | 80 |
| PB-3A | | | | |
| PB-3 | | | | |
| HIRAD RA-15 | | | | |
| HIRAD RA-100 | 6 | 8 | 10 | 8 |
| CB (acetylene) | | | | 10 |
| CB #960 | | | | |
| Graphite WF-7 | | | | |
| ESO | 3 | 3 | 3 | 3 |
| Stabilizer | 2.5 | 2.5 | 2.5 | 2.5 |
| Processing aid | 3 | 3 | 3 | 3 |
| Stearic acid | 0.2 | 0.2 | 0.2 | 0.2 |
| Initial physical properties | | | | |
| Hardness (HDA) | 65 | 64 | 63 | 67 |
| Tensile maximum stress (MPa) | 16.07 | 16.04 | 15.76 | 16.96 |
| Tensile 100 M (MPa) | 4.87 | 4.79 | 4.68 | 5.59 |
| Tensile elongation (%) | 432 | 431 | 430 | 414 |
| Physical properties after 3 MGy irradiation | | | | |
| Hardness (HDA) | 66 | 66 | 65 | 68 |
| Tensile maximum stress (MPa) | 7.38 | 8.57 | 7.97 | 7.59 |
| Tensile 100 M (MPa) | | 7.89 | 7.97 | 7.1 |
| Tensile elongation (%) | 91 | 106 | 100.3 | 94.2 |
| Retention after 3 MGy irradiation | | | | |
| Hardness retention (%) | 101.5 | 103.1 | 103.2 | 101.5 |
| Tensile maximum stress retention (%) | 45.9 | 53.4 | 50.6 | 44.8 |
| Tensile 100 M retention (%) | | 164.7 | 170.3 | 127 |
| Tensile elongation retention (%) | 21.1 | 24.6 | 23.3 | 22.8 |

**[Table 2]**

| Formulation | Reference Example 25 | Reference Example 26 | Exam ple 27 | Reference Example 28 | Reference Example 29 | Reference Example 30 | Reference Example 31 |
|---|---|---|---|---|---|---|---|
| PVC (4500) | | | | | 100 | | |
| PVC (2500) | 100 | 100 | 100 | | | 90 | 70 |
| PVC (1300) | | | | 100 | | | |
| PRICTMER GX | | | | | | | |
| TG-40 | | | | | | 10 | 30 |
| Formulation | Reference Example 25 | Reference Example 26 | Exam ple 27 | Reference Example 28 | Reference Example 29 | Reference Example 30 | Reference Example 31 |
| DOP | | | | | | | |
| PB-3A | 80 | 80 | 80 | 80 | 80 | 80 | 80 |
| PB-3 | | | | | | | |
| HIRAD RA-15 | | | | | | | |
| HIRAD RA-100 | 3 | 5 | 5 | 5 | 5 | 5 | 5 |
| CB (acetylene) | | | 10 | | | | |
| CB #960 | | | | | | | |
| Graphite WF-7 | | | | | | | |
| ESO | 3 | 3 | 3 | 3 | 3 | 3 | 3 |
| Stabilizer | 2.5 | 25 | 2.5 | 2.5 | 2.5 | 2.5 | 2.5 |
| Processing aid | 3 | 3 | 3 | 3 | 3 | 3 | 3 |
| Stearic acid | 0.2 | 0.2 | 0.2 | 0.2 | 0.2 | 0.2 | 0.2 |
| Initial physical properties | | | | | | | |
| Hardness (HDA) | 66 | 65 | 72 | 63 | 66 | 64 | 61 |
| Tensile maximum stress (MPa) | 18.18 | 20.54 | 22.45 | 17 | 19.68 | 18.68 | 13.64 |
| Tensile 100 M (MPa) | 5.36 | 5.21 | 6.49 | 4.56 | 5.89 | 4.58 | 3.74 |
| Tensile elongation (%) | 402 | 437 | 413 | 445 | 381 | 436 | 426 |
| Physical properties after 3 MGy irradiation | | | | | | | |
| Hardness (HDA) | 65 | 64 | 67 | 60 | 63 | 62 | 60 |
| Tensile maximum stress (MPa) | 9..56 | 10.32 | 10.74 | 7.97 | 9.79 | 8.06 | 6.94 |
| Tensile 100 M (MPa) | 6,33 | 6.33 | 7.18 | 5.22 | 7 | 5.48 | 4.71 |
| Tensile elongation (%) | 144 | 149 | 149 | 144 | 131 | 136 | 137 |
| Retention after 3 MGy irradiation | | | | | | | |
| Hardness retention (%) | 98.5 | 98.5 | 93.1 | 95,2 | 95.5 | 96.9 | 98.4 |
| Tensile maximum stress retention (%) | 52.6 | 50.2 | 47.8 | 46.9 | 49.7 | 43.1 | 50.9 |
| Tensile 100 M retention (%) | 118.1 | 121.5 | 110.6 | 114.5 | 118.8 | 119.7 | 125.9 |
| Tensile elongation retention (%) | 35.8 | 34.1 | 36.1 | 32.4 | 34.4 | 31.2 | 32.2 |

**[Table 3]**

| Formulation | Reference Example 32 | Reference Example 33 | Example 34 | Example 35 | Example 36 | Example 37 | Example 38 | Example 39 |
|---|---|---|---|---|---|---|---|---|
| PVC (4500) | | | | | | | | |
| PVC (2500) | 100 | 100 | 100 | 100 | 100 | 100 | 100 | |
| PVC (1300) | | | | | | | | |
| PRICTMER GX | | | | | | | | 100 |
| TG-40 | | | | | | | | |
| DOP | | | | | | | | |
| PB-3A | 80 | | 80 | 80 | 80 | 80 | 80 | 40 |
| PB-3 | | 80 | | | | | | |
| HIRAD RA-15 | 9 | | | | 9 | | | |
| HIRAD RA-100 | | 5 | 5 | 5 | | 5 | 5 | 5 |
| CB (acetylene) | | | 25 | 50 | 25 | | | 25 |
| CB #960 | | | | | | 25 | | |
| Graphite WF-7 | | | | | | | 25 | |
| ESO | 3 | 3 | 3 | 3 | 3 | 3 | 3 | 3 |
| Stabilizer | 2.2 | 2.2 | 2.2 | 2.2 | 2.2 | 2.2 | 2.2 | 2.2 |
| Processing aid | 3 | 3 | 3 | 3 | 3 | 3 | 3 | 3 |
| Stearic acid | 0.4 | 0.4 | 0.4 | 0.4 | 0.4 | 0.4 | 0.4 | 0.4 |
| Initial physical properties | | | | | | | | |
| Hardness (HDA) | 62 | 63 | 75 | 85 | 74 | 73 | 76 | 83 |
| Tensile maximum stress (MPa) | 18.15 | 19.96 | 21.42 | 18.75 | 20.9 | 20.77 | 21.04 | 9.46 |
| Tensile 100 M (MPa) | 4.91 | 5.02 | 8.62 | 12,31 | 7.5 | 7.82 | 8.35 | 7.27 |
| Tensile elongation (%) | 409 | 421 | 342 | 290 | 361 | 319 | 383 | 244 |
| Physical properties after 3 MGy irradiation | | | | | | | | |
| Hardness (HDA) | 55 | 59 | 69 | 78 | 69 | 70 | 68 | 90 |
| Tensile maximum stress (MPa) | 8.11 | 10.83 | 15.72 | 15.27 | 13.04 | 13.29 | 13.62 | 13.09 |
| Tensile 100 M (MPa) | 3.88 | 4.68 | 7.79 | 12.03 | 6.86 | 9 | 6.67 | 12.61 |
| Tensile elongation (%) | 197 | 216 | 207 | 145 | 198 | 153 | 277 | 106 |
| Retention after 3 MGy irradiation | | | | | | | | |
| Hardness retention (%) | 88.7 | 93.7 | 92.0 | 91.8 | 93.2 | 95.9 | 89.5 | 108.4 |
| Tensile maximum stress retention (%) | 44.7 | 54.3 | 73.4 | 81.4 | 62.4 | 64.0 | 64.7 | 138.4 |
| Tensile 100 M retention (%) | 79.0 | 93.2 | 90.4 | 97.7 | 91.5 | 115.1 | 79.9 | 173.5 |
| Tensile elongation retention (%) | 48.2 | 51.3 | 60.5 | 50.0 | 54.8 | 48.0 | 72.3 | 43.4 |
| THF immersion test (*) | | | | | | | | |
| Sample dissolution after 3 MGy irradiation | Poor | Poor | Fair | Fair | Fair | Fair | Fair | Fair |
| Sample swelling rate (%) after 3 MGy irradiation | 167 | 183 | | | | | | |

| | | | | | | | | |
|---|---|---|---|---|---|---|---|---|
| *THF immersion test Poor: insoluble Fair: slightly dissolved Good: dissolved | | | | | | | | |

**[Table 4]**

| Formulation | Reference Example 40 | Reference Example 41 | Reference Example 42 | Reference Example 43 | Reference Example 44 |
|---|---|---|---|---|---|
| PVC | 100 | 100 | 100 | 100 | 100 |
| DOP | 80 | 80 | 80 | | |
| PB-3A | | | | 80 | 80 |
| HIRAD RA-100 | | 5 | 10 | 5 | |
| HIRAD RP-42R | | | | | 1 |
| ESO | 3 | 3 | 3 | 3 | 3 |
| Stabilizer | 2.5 | 2.5 | 2.5 | 2.5 | 2.5 |
| Processing aid | 1.5 | 1.5 | 1.5 | 1.5 | 1.5 |
| Stearic acid | 0.4 | 0.4 | 0.4 | 0.4 | 0.4 |
| Initial physical properties | | | | | |
| Hardness (HDA) | 70 | 68 | 67 | 67 | 70 |
| Tensile maximum stress (MPa) | 14.34 | 16.92 | 14.44 | 20.4 | 19,5 |
| Tensile 100 M (MPa) | 4.78 | 5.23 | 4.99 | 5.79 | 6.09 |
| Tensile elongation (%) | 417 | 401.1 | 363 | 399 | 370 |
| Physical properties after 2 MGy irradiation | | | | | |
| Hardness (HDA) | 68 | 67 | 62 | 63 | 65 |
| Tensile maximum stress (MPa) | 12.95 | 13.75 | 12.85 | 15.45 | 15.11 |
| Tensile 100 M (MPa) | 5.84 | 5 | 4.46 | 4.71 | 4.88 |
| Tensile elongation (%) | 214 | 287 | 299 | 328 | 307 |
| Retention after 2 MGy irradiation | | | | | |
| Hardness retention (%) | 97.1 | 98.5 | 92.5 | 94.0 | 92.9 |
| Tensile maximum stress retention (%) | 90.3 | 81.3 | 89.0 | 75.7 | 77.5 |
| Tensile 100 M retention (%) | 122.2 | 95.6 | 89.4 | 81.3 | 80.1 |
| Tensile elonqation retention (%) | 51.3 | 71.6 | 82.4 | 82.2 | 83.0 |

### INDUSTRIAL APPLICABILITY

The radiation resistant vinyl chloride resin composition can be used in, for example, a flexible hose or a flexible tube, can be used under radiation exposure environments, and furthermore, has high industrial use value.

### LIST OF REFERENCE NUMERALS

- 1: flexible hose
- 2: hose wall
- 3: spiral reinforcement body

## Claims

1. A radiation resistant vinyl chloride resin composition, comprising:
100 parts by weight of a vinyl chloride resin;
20 parts by weight or more and 110 parts by weight or less of a benzoic acid-based plasticizer;
5 parts by weight or more and 50 parts by weight or less of carbon black and/or graphite powder; and
1 part by weight or more and 15 parts by weight or less of phenyl ether-based oil and grease,
wherein a Duro A hardness before γ ray irradiation is 50 HDA or more and 95 HDA or less.

2. A flexible hose having a hose wall which includes the radiation resistant vinyl chloride resin composition according to claim 1.

3. A flexible tube including the radiation resistant vinyl chloride resin composition according to claim 1.

## Patentansprüche

1. Eine strahlungsbeständige Vinylchloridharz-Zusammensetzung, die folgende Merkmale aufweist:
100 Gewichtsteile eines Vinylchloridharzes;
20 Gewichtsteile oder mehr und 110 Gewichtsteile oder weniger eines Weichmachers auf Benzoesäurebasis; und
5 Gewichtsteile oder mehr und 50 Gewichtsteile oder weniger Kohleschwarz- und/oder Graphitpulver,
1 Gewichtsteil oder mehr und 15 Gewichtsteile oder weniger Öl und Schmiermittel auf Phenyletherbasis,
wobei eine Duro-A-Härte vor der γ-Strahlenbestrahlung 50 HDA oder mehr und 95 HDA oder weniger beträgt.

2. Ein flexibler Schlauch mit einer Schlauchwand, die die strahlungsbeständige Vinylchloridharz-Zusammensetzung gemäß Anspruch 1 umfasst.

3. Eine flexible Röhre, die die strahlungsbeständige Vinylchloridharz-Zusammensetzung gemäß Anspruch 1 umfasst.

## Revendications

1. Composition de résine de chlorure de vinyle résistant au rayonnement, comprenant:
100 parts en poids d'une résine de chlorure de vinyle;
20 parts en poids ou plus et 110 parts en poids ou moins d'un plastifiant à base d'acide benzoïque;
5 parts en poids ou plus et 50 parts en poids ou moins de poudre de noir de carbone et/ou de graphite; et
1 part en poids ou plus et 15 parts en poids ou moins d'huile et de graisse à base d'éther phénylique,
dans laquelle une dureté Duro A avant irradiation aux rayons γ est de 50 HDA ou plus et de 95 HDA ou moins.

2. Tuyau flexible présentant une paroi de tuyau qui comporte la composition de résine de chlorure de vinyle résistant au rayonnement selon la revendication 1.

3. Tube flexible comportant la composition de résine de chlorure de vinyle résistant au rayonnement selon la revendication 1.
